# EUROPÄISCHE PATENTANMELDUNG

(11) **EP 1 332 776 A1**
(43) Veröffentlichungstag der Anmeldung: **06.08.2003**
(21) Anmeldenummer: 03000783.5
(22) Anmeldetag: 14.01.2003
(51) Int. Cl.: A63B 67/04, A47B 25/00

(54) **Einrichtung zum Verbinden von Tischtennisplatten**

(30) Priorität: 31.01.2002 DE 10203879
(71) Anmelder: Sponeta GmbH, 99994 Schlotheim (DE)
(72) Erfinder: Schöllhorn, Steffen, 99706 Sonderhausen (DE)
(74) Vertreter: Liedtke, Klaus, Dr.

(57) **Zusammenfassung**

2.1 Der Erfindung liegt die Aufgabe zugrunde, eine einfach und kostengünstig herstellbare, kompakte und einfach zu handhabende Einrichtung zum Verbinden von Tischtennisplatten anzugeben, die es insbesondere gestattet, die Tischtennisplatten in demontiertem Zustand ohne Gefahr von Beschädigungen vertikal zu lagern und zu verschieben und im aufgebauten Zustand die Netzhalterung einfach und sicher zu befestigen.
2.2 Erfindungsgemäß gelingt die Lösung der Aufgabe dadurch, dass an zu verbindenden Rändern der Tischtennisplatten korrespondierende Verbindungselemente befestigt sind, wobei die Verbindungselemente Hinterschneidungen aufweisen und die Hinterschneidungen korrespondierender Verbindungselemente ineinander fügbar sind.
2.3 Die Erfindung betrifft eine Einrichtung zum Verbinden von Tischtennisplatten eines Tischtennistisches.

## Beschreibung

Die Erfindung betrifft eine Einrichtung zum Verbinden von Tischtennisplatten eines Tischtennistisches.

Die Erfindung wird vorzugsweise zum lösbaren Verbinden von vertikal lagerbaren Tischtennisplatten eines Tischtennistisches angewendet.

Im Stand der Technik sind verschiedene Vorrichtungen zum Verbinden von Tischtennisplatten eines Tischtennistisches bekannt.

Üblicherweise werden zwei ein Tischtennisspiel bildende Tischtennisplatten durch eine Klemmvorrichtung miteinander verbunden. Das Verklemmen kann dabei mittels einer Feder mit Exzenter erfolgen; insbesondere ist bekannt, dabei Klemmvorrichtungen zu benutzen, die gleichzeitig als Halterung für Tischtennisnetze dienen.
Nachteilig sind dabei der aurwendige Aufbau der Klemmvorrichtung sowie die mangelhafte Belastbarkeit derartiger Federn mit Exzenter - insbesondere bei der üblichen vertikalen Aufstellung der demontierten Tischtennisplatten ist die Feder leicht zu verbiegen. Darüber hinaus ist nachteilig, dass die Befestigung der Netzhalterung einen zusätzlichen umständlichen Aufbau erfordert, wobei die Netzhalterung bei jedem Aufbau erneut zu justierenden ist und im demontierten Zustand gesondert gelagert werden muss.

Weiterhin ist zum Verbinden von Tischtennisplatten eines Tischtennistisches die Verwendung von Schraubzwingen bekannt, die ebenfalls gleichzeitig als Netzhalterung dienen.
Nach DE 37 17 230 A 1 ist ein Tischtennisnetzhalter für den Freizeitsport bekannt, der in die drei Hauptbestandteile Ausleger, Pfosten und Zwinge zerlegbar ist, wobei der Pfosten durch eine Nase, die in einen am Ende des Auslegers quer zur Längsachse des Auslegers verlaufenden Schlitz eingreift, und durch Sicken mit dem Ausleger verbunden ist und die Zwinge durch zwei Zungen, die in zwei in Längsrichtung des Auslegers parallel verlaufende Führungsschlitze eingreifen und durch Sicken mit dem Ausleger verbunden ist.
Nachteilig sind dabei der aulwendige Aufbau derartiger Tischtennisnetzhalter. Darüber hinaus ist neben der Gefahr der Schädigung der Tischtennisplatten durch die Schraubzwingen nachteilig, dass die Befestigung der Netzhalterung einen zusätzlichen umständlichen Aufbau erfordert, wobei die Netzhalterung bei jedem Aufbau erneut zu justierenden ist und im demontierten Zustand gesondert gelagert werden muss.

Ferner ist in DE 32 10 418 A 1 eine Halterung für ein Tischtennisnetz beschrieben, das zwei Spannpfosten aufweist, an denen jeweils ein das Netz haltender Bügel angeordnet ist. Zu jedem Pfosten verläuft jeweils eine senkrechte Verstrebung, die mit einer Tischtennisplatte lösbar verbindbar ist, wobei die Verstrebung einen dauermagnetischen Werkstoff aufweist, der zum Positionieren der Halterung mit einem an der der Verstrebung zugewandten Fläche der Tischtennisplatte vorhandenen weichmagnetischen Werkstoff in Wechselwirkung tritt.
Nachteilig sind dabei neben dem ebenfalls aufwendigen Aufbau die mangelhafte Belastbarkeit der magnetischen Verbindung sowie die im demontierten Zustand erforderliche gesonderte Lagerung der Netzhalterung.

Der Erfindung liegt die Aufgabe zugrunde, eine einfach und kostengünstig herstellbare, kompakte und einfach zu handhabende Einrichtung zum Verbinden von Tischtennisplatten anzugeben, die es insbesondere gestattet, die Tischtennisplatten in demontiertem Zustand ohne Gefahr von Beschädigungen vertikal zu lagern und zu verschieben und im aufgebauten Zustand die Netzhalterung einfach und sicher zu befestigen.

Erfindungsgemäß wird die Aufgabe dadurch gelöst, dass an zu verbindenden Rändern der Tischtennisplatten korrespondierende Verbindungselemente befestigt sind, wobei die Verbindungselemente Hinterschneidungen aurweisen und die Hinterschneidungen korrespondierender Verbindungselemente ineinander fügbar sind.

Vorteilhafte Ausgestaltung sehen vor, dass die Hinterschneidungen als prismatische Ausbuchtungen ausgebildet sind, die vorzugsweise einen schwalbenschwanzförmigen Querschnitt aurweisen.

Um ein Verschiebung der Verbindungselemente in Fügerichtung zu verhindern, ist es zweckmäßig, dass im Bereich der Hinterschneidungen der Verbindungselemente korrespondierende Sicherungsnuten angeordnet sind und dass in einem von den korrespondierenden Sicherungsnuten ineinander gefügter korrespondierender Verbindungselemente gebildeten Hohlraum eine einschiebbare Feder zur angeordnet ist.

Dabei ist es zweckmäßig, dass der von den korrespondierende Sicherungsnuten ineinander gefügter korrespondierender Verbindungselemente gebildete Hohlraum einen rechteckigen Querschnitt aufweist. Vorzugsweise wird für die in den Hohlraum einschiebbare Feder ein mit einem Anschlag versehenes, quaderförmiges Stabende einer winkelförmigen Netzhalterung verwendet.

Eine bevorzugte Ausführung sieht vor, dass die winkelförmige Netzhalterung aus einem zweischenkligen, unter etwa 90° abgebogenen, metallischen Rundstab besteht, bei dem ein Schenkel ein quaderförmiges Stabende aufweist, wobei mindestens eine Kantenlänge des Quaderquerschnittes kleiner als der Durchmesser des Rundstabes ist und ein Rundstabende am Übergang zum quaderförmigen Stabende den Anschlag des quaderförmigen Stabendes bildet.

Ferner ist es möglich, dass an der der Tischtennisplatte abgewandten Seite der jeweils angeschlossenen Verbindungselemente überstehende Stege angeordnet sind.

Eine weitere vorteilhafte Ausgestaltung sieht vor dass an den Verbindungselementen Halterungen zur zeitweiligen Aufnahme der Netzhalterungen angeordnet sind.

Zur Verringerung des Herstellungs- und Wartungsaufwandes ist es zweckmäßig, identische Verbindungselemente zu verwenden.

Bei einer bevorzugter Ausgestaltung sind die Verbindungselemente zweischenklig gestaltet, wobei jeweils ein Schenkel unterhalb der Tischtennisplatte angeordnet und an dieser mit Schrauben befestigt ist und Einsenkungen aufweist. Der zweite Schenkel ist am zu verbindenden Rand der Tischtennisplatte zwischen den zu verbindenden Tischtennisplatten angeordnet. An diesem sind die prismatischen Ausbuchtungen angeordnet sind, wobei die Fügerichtung der prismatischen Ausbuchtungen die Normale der Ebene der Tischtennisplatten ist.

Die Erfindung weist eine Reihe von Vorteilen auf. Hierzu zählen insbesondere:
- Durch die Befestigung von korrespondierenden Verbindungselemente mit wechselseitig ineinander fügbaren Hinterschneidungen an zu verbindenden Rändern der Tischtennisplatten gelingt auf einfache Weise eine sichere und belastbare Verbindung von Tischtennisplatten.
- Die Anordnung gewährleistet eine Verbindung, bei der im Spielbetrieb ein Versatz der zusammenstoßenden Platten sicher vermieden und dadurch die Unfallgefahr verringert wird.
- Es können sowohl handelsübliche als auch speziell dafür vorgesehene Netzgarnituren verwendet werden.
- Durch die Anordnung von Sicherungsnuten im Bereich der Hinterschneidungen der Verbindungselemente, die bei ineinander gefügten korrespondierenden Verbindungselementen einen gemeinsamen Hohlraum bilden, in den ein Schenkel einer als Sicherungsfeder dienenden schenkelförmigen Netzhalterung einschiebbar ist, gelingt sowohl eine Verschiebungsverhinderung in Fügerichtung als auch eine einfache und justierungsfreie Befestigung der Netzhalterung.
- Bei handelsüblichen Netzgarnituren bewirken die beweglichen Teile der Klemmung eine Belastung der Kanten der Tischplatten, was bei der erfindungsgemäßen Lösung durch die dazwischenliegenden Kunststoffteile verhindert wird.

Die Erfindung wird im folgenden anhand eines Ausführungsbeispieles näher erläutert.

Dazu zeigen
- Figur 1: eine Draufsicht auf einen aufgebauten Tischtennistisch,
- Figur 2: eine Seitenansicht erfindungsgemäßer Verbindungselemente in aufgebautem Zustand,
- Figur 3: die zugehörige Untersicht,
- Figur 4: eine isometrische Ansicht einer erfindungsgemäßen Netzhalterung,
- Figur 5: die zugehörige stirnseitige Ansicht,
- Figur 6: eine Seitenansicht einer vertikal aufgestellten Tischtennisplatte,
- Figur 7: eine isometrische Ansicht eines korrespondierenden Paares von Verbindungselementen beim Fügen
und
- Figur 8: eine isometrische Ansicht eines gefügten Paares von korrespondierenden Verbindungselementen.

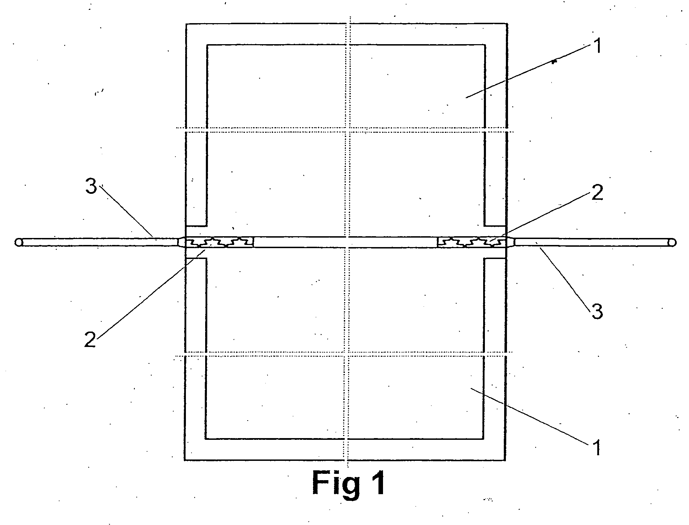

In **Figur 1** ist ein aus zwei mittels Verbindungselementen 2 miteinander verbundenen Tischtennisplatten 1 gebildeter Tischtennistisch dargestellt. An jeder Tischtennisplatte 1 sind an jeweils einem Rand jeweils zwei Verbindungselemente 2 befestigt. An jedem Paar korrespondierend angeordneter Verbindungselemente 2 ist eine winkelförmige Netzhalterung 3 angeordnet.

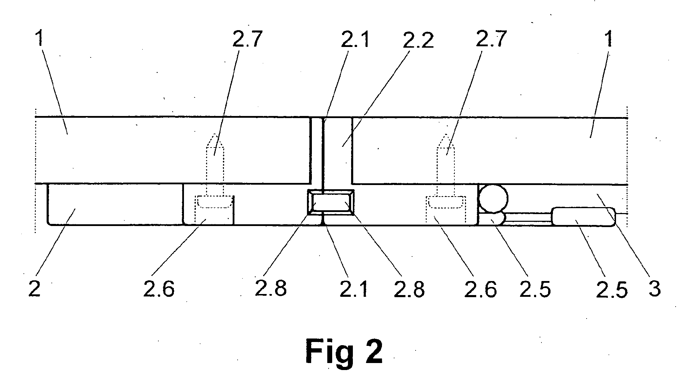

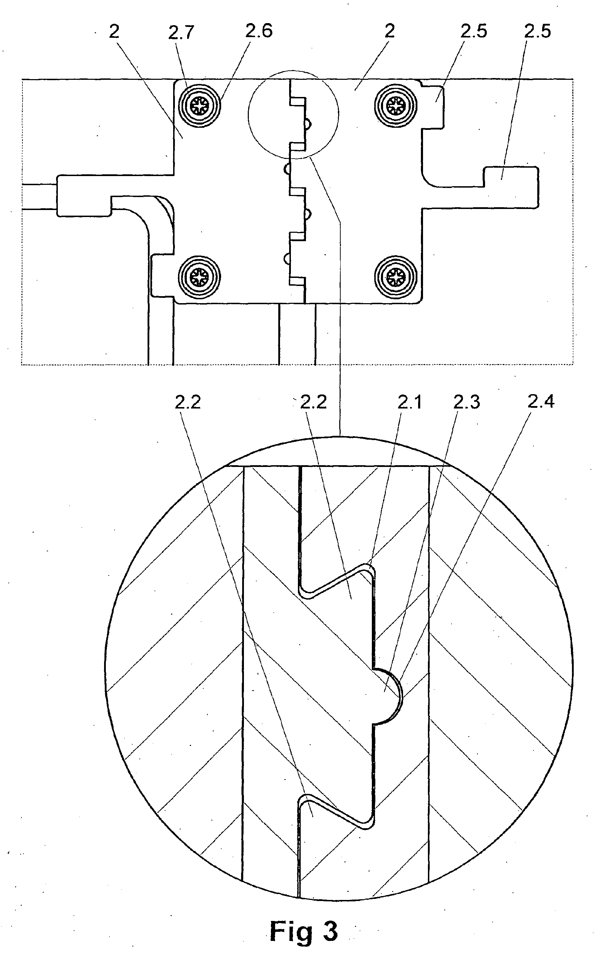

**Figuren 2 und 3** zeigen eine Seitenansicht und die zugehörige Untersicht eines korrespondierenden Paares erfindungsgemäßer Verbindungselemente 2 in aufgebautem Zustand. Die Verbindungselemente 2 sind jeweils zweischenklig ausgebildet, wobei jeweils ein Schenkel unterhalb der Tischtennisplatte 1 angeordnet und an dieser mit zwei Schrauben 2.7, deren Köpfe in Einsenkungen 2.6 versenkt sind, befestigt ist. An der der jeweils zugehörigen Tischtennisplatte 1 zugewandten Seite des unteren Schenkels sind jeweils zwei Halterungen 2.5 zum Einklemmen der winkelförmigen Netzhalterung 3 im Zustand demontierten Netzes angeordnet. Eine eingeklemmte winkelförmige Netzhalterung 3 ist in Figur 2 rechts dargestellt.
Der jeweils zweite Schenkel der Verbindungselemente 2 ist am zu verbindenden Rand der zugehörenden Tischtennisplatte 1 angeordnet und weist schwalbenschwanzförmige Ausbuchtungen 2.2 auf, wobei die schwalbenschwanzförmigen Ausbuchtungen 2.2 der korrespondierenden Verbindungselemente wechselseitig in einander gefügt sind. Die Fügerichtung der ist die Normale der Ebenen der Tischtennisplatten 1. Eine zwischen den schwalbenschwanzförmig verzahnten Ausbuchtungen 2.2 der korrespondierenden Verbindungselemente 2 gebildete Fuge 2.1 weist dabei ein so geringes Spaltmaß auf, dass gegenseitige Verschiebungen zwischen den Tischtennisplatten 1 in einer Richtung in deren Ebene vernachlässigbar gering sind. Somit sind die beiden mittels der Verbindungselemente 2 in einander gefügten Tischtennisplatten 1 - zunächst - nur noch normal zur Tischebene verschieblich. Zur zusätzlichen Verhinderung einer Verschiebung in dieser (Füge-)Richtung sind - wie in Figur 2 erkennbar - parallel zum zu verbindenen Rand der Tischtennisplatten 1 im Bereich der Kanten der Verbindungselemente 2 Sicherungsnuten 2.8 angeordnet, die jeweils die schwalbenschwanzförmigen Ausbuchtungen 2.2 durchlaufen und auf gleicher Höhe angeordnet sind, so dass die Sicherungsnuten 2.8 der ineinander gefügten, korrespondierenden Verbindungselemente 2 bei gleicher Höhenlage der Tischtennisplatten 1 einen gemeinsamen Hohlraum mit quadratischem Querschnitt bilden, in den eine Sicherungsfeder einschiebbar ist.

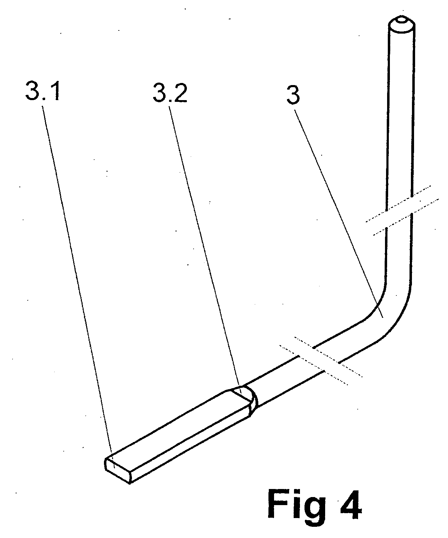

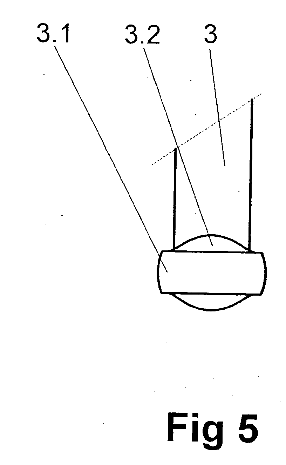

Die **Figuren 4 und 5** zeigen eine winkelförmige Netzhalterung 3, die an ihrem horizontalen Schenkel ein quaderförmiges Stabende 3.1 aufweist, welches als eine derartige Sicherungsfeder in den von den Sicherungsnuten 2.8 der ineinander gefügten, korrespondierenden Verbindungselemente 2 gebildeten gemeinsamen Hohlraum mit quadratischem Querschnitt einschiebbar ist. Der vertikale Schenkel der Netzhalterung 3 dient der Befestigung des Netzes; ein Rundstabende 3.2 am Übergang des Kreisquerschnittes des horizontalen Schenkels der Netzhalterung 3 zum quaderförmigen Stabende 3.1, dessen Durchmesser größer als die Höhe des Querschnittes des quaderförmigen Stabendes 3.1 ist, dient als Anschlag beim Einführen des quaderförmigen Stabendes 3.1 in die Sicherungsnuten 2.8 und somit der Lagefixierung der Netzhalterung 3 im eingesteckten Zustand.

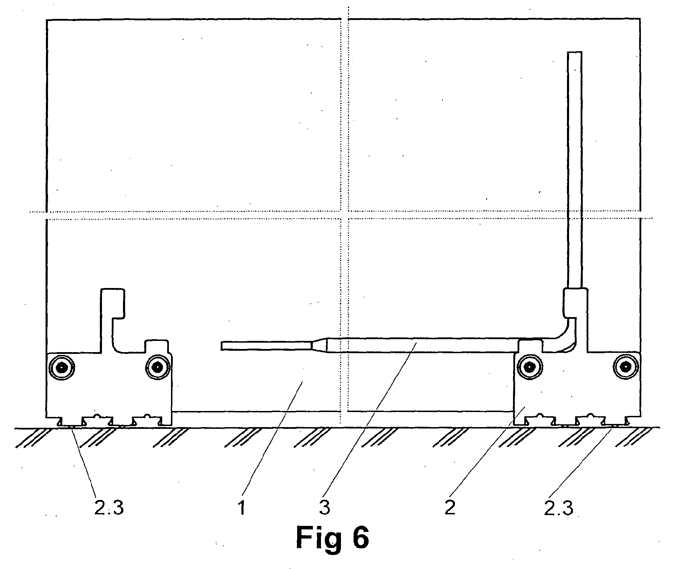

**Figur 6** zeigt die Seitenansicht einer vertikal auf ihren Verbindungselementen 2 aufgestellten Tischtennisplatte 1. Um einen Abrieb der schwalbenschwanzförmigen Ausbuchtungen 2.2, auf denen das Gewicht der aufgestellten Tischtennisplatte 1 lagert, zu vermeiden, sind an den Ausbuchtungen 2.2 Stege 2.3 angeordnet, deren Abnutzung beim Verschieben der aufgestellten Tischtennisplatte 1 für die Paßgenauigkeit der Ausbuchtungen 2.2 unschädlich ist.

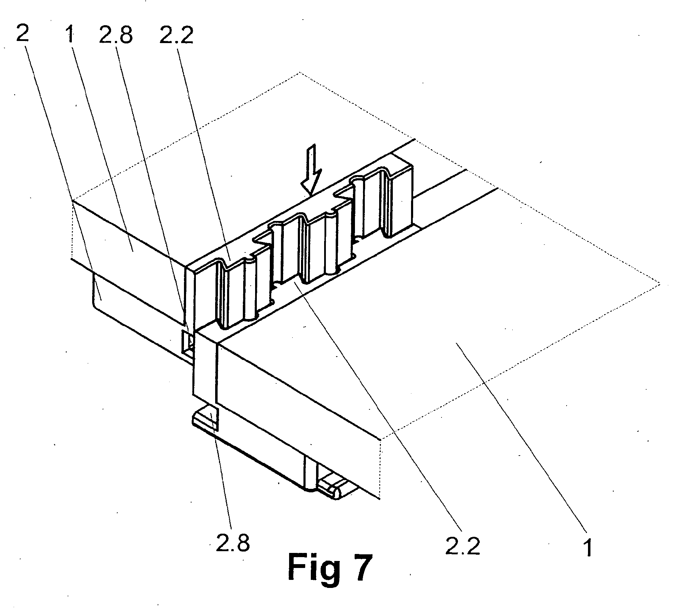

Die in Figur 7 gezeigte isometrische Ansicht stellt ein korrespondierendes Paar von Verbindungselementen 2 mit zwei zu verbindenden Tischtennisplatten 1 dar. Die beiden Tischtennisplatten 1 befinden sich in paralleler, leicht höhenversetzter Lage, wobei die schwalbenschwanzförmigen Ausbuchtungen 2.2 bereits ineinander gefügt sind. Die Fügerichtung ist mit einem Pfeil dargestellt. Die Sicherungsnuten 2.8 der ineinander zu fügenden korrespondierenden Verbindungselemente 2 sind ebenfalls noch höhenversetzt.

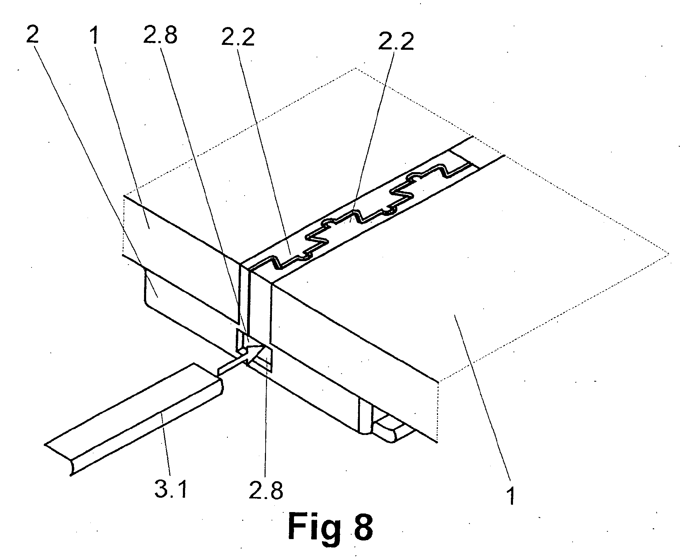

**Figur 8** zeigt die gleiche isometrische Ansicht wie Figur 7; die beiden Tischtennisplatten 1 befinden sich jedoch bereits in gleicher Höhe. Die schwalbenschwanzförmigen Ausbuchtungen 2.2 sind vollständig ineinander gefügt und die Sicherungsnuten 2.8 der korrespondierenden Verbindungselemente 2 befinden sich ebenfalls bereits in gleicher Höhe und bilden gemeinsam einen quadratischen Querschnitt, dessen Abmessungen geringfügig größer als die des dargestellten quaderförmigen Stabendes 3.1 sind, so dass das quaderförmige Stabende 3.1 zur Fixierung der Lage der Netzhalterung 3 und zur Sicherung der Verbindungselemente 2 gegen Verschiebung in Fügerichtung in Richtung des Pfeiles in die Sicherungsnuten 2.8 eingeschoben werden kann.
In den Figuren ist die Unterkonstruktion für beide Tischtennisplatten 1 nicht dargestellt; es ist die Anordnung einer gemeinsamen oder mehrerer unabhängiger Unterkonstruktion möglich. Alle - auch die korrespondierenden - in den Figuren dargestellten Verbindungselemente 2 weisen eine identische Geometrie auf.

### BEZUGSZEICHENLISTE

- 1: Tischtennisplatten
- 2: Verbindungselement
2.1 Fuge
2.2 schwalbenschwanzförmige Ausbuchtung
2.3 Steg
2.4 Nut
2.5 Halterung
2.6 Einsenkung
2.7 Schrauben
2.8 Sicherungsnut
- 3: Netzhalterung
3.1 quaderförmiges Stabende
3.2 Rundstabende

## Patentansprüche

1. Einrichtung zum Verbinden von Tischtennisplatten (1) eines Tischtennistisches, **dadurch gekennzeichnet, dass** an zu verbindenden Rändern der Tischtennisplatten (1) korrespondierende Verbindungselemente (2) befestigt sind, dass die Verbindungselemente (2) Hinterschneidungen aufweisen und dass die Hinterschneidungen korrespondierender Verbindungselemente (2) ineinander fügbar sind.

2. Einrichtung nach Anspruch 1, **dadurch gekennzeichnet, dass** die Hinterschneidungen als prismatische Ausbuchtungen (2.2) ausgebildet sind .

3. Einrichtung nach Anspruch 2, **dadurch gekennzeichnet, dass** die prismatischen Ausbuchtungen (2.2) einen schwalbenschwanzförmigen Querschnitt aufweisen.

4. Einrichtung nach einem der vorhergehenden Ansprüche, **dadurch gekennzeichnet, dass** im Bereich der Hinterschneidungen der Verbindungselemente (2) korrespondierende Sicherungsnuten (2.8) angeordnet sind und dass in einem von den korrespondierenden Sicherungsnuten (2.8) ineinander gefügter korrespondierender Verbindungselemente (2) gebildeten Hohlraum eine einschiebbare Feder zur Verschiebungsverhinderung in Fügerichtung angeordnet ist.

5. Einrichtung nach Anspruch 4, **dadurch gekennzeichnet, dass** der von den korrespondierende Sicherungsnuten (2.8) ineinander gefügter korrespondierender Verbindungselemente (2) gebildeten Hohlraum einen rechteckigen Querschnitt aufweist.

6. Einrichtung nach Anspruch 4 oder 5, **dadurch gekennzeichnet, dass** die in den Hohlraum einschiebbare Feder ein mit einem Anschlag versehenes, quaderförmiges Stabende (3.1) einer winkelförmigen Netzhalterung (3) ist.

7. Einrichtung nach Anspruch 6, **dadurch gekennzeichnet, dass** die winkelförmige Netzhalterung (3) aus einem zweischenkligen, unter etwa 90° abgebogenen, metallischen Rundstab besteht, bei dem ein Schenkel ein quaderförmiges Stabende (3.1) aufweist, wobei mindestens eine Kantenlänge des Quaderquerschnittes kleiner als der Durchmesser des Rundstabes ist und ein Rundstabende (3.2) am Übergang zum quaderförmigen Stabende (3.1) den Anschlag des quaderförmigen Stabendes (3.1) bildet.

8. Einrichtung nach einem der vorhergehenden Ansprüche, **dadurch gekennzeichnet, dass** an der der Tischtennisplatte (1) abgewandten Seite der jeweils angeschlossenen Verbindungselemente (2) überstehende Stege (2.4) angeordnet sind.

9. Einrichtung nach einem der vorhergehenden Ansprüche, **dadurch gekennzeichnet, dass** an den Verbindungselementen (2) Halterungen (2.5) zur zeitweiligen Aufnahme der Netzhalterungen (3) angeordnet sind.

10. Einrichtung nach Anspruch 2, **dadurch gekennzeichnet, dass** die Verbindungselemente (2) zweischenklig sind, wobei jeweils ein Schenkel unterhalb der Tischtennisplatte (1) angeordnet und an dieser mit Schrauben (2.7) befestigt ist und Einsenkungen (2.6) aufweist und der zweite Schenkel am zu verbindenden Rand der Tischtennisplatte (1) zwischen den zu verbindenden Tischtennisplatten (1) angeordnet ist und wobei an dem zweiten Schenkel die prismatischen Ausbuchtungen (2.2) angeordnet sind, wobei die Fügerichtung der prismatischen Ausbuchtungen (2.2) die Normale der Ebene der Tischtennisplatten (1) ist.

## Geänderte Patentansprüche

### Geänderte Patentansprüche gemäss Regel 86(2) EPÜ.

**1.** Einrichtung zum Verbinden von Tischtennisplatten (1) eines Tischtennistisches, wobei an zu verbindenden Rändern der Tischtennisplatten (1) korrespondierende Verbindungselemente (2) mit Hinterschneidungen befestigt sind, wobei die Hinterschneidungen korrespondierender Verbindungselemente (2) ineinander fügbar sind. **dadurch gekennzeichnet, dass** im Bereich der Hinterschneidungen der Verbindungselemente (2) korrespondierende Sicherungsnuten (2.8) angeordnet sind und dass in einem von den korrespondierenden Sicherungsnuten (2.8) ineinander gefügter korrespondierender Verbindungselemente (2) gebildeten Hohlraum eine einschiebbare Feder zur Verschiebungsverhinderung in Fügerichtung angeordnet ist.

**2.** Einrichtung nach Anspruch 1, **dadurch gekennzeichnet, dass** die Hinterschneidungen als prismatische Ausbuchtungen (2.2) ausgebildet sind.

**3.** Einrichtung nach Anspruch 2, **dadurch gekennzeichnet, dass** die prismatischen Ausbuchtungen (2.2) einen schwalbenschwanzförmigen Querschnitt aufweisen.

**4.** Einrichtung nach einem der vorhergehenden Ansprüche, **dadurch gekennzeichnet, dass** der von den korrespondierende Sicherungsnuten (2.8) ineinander gefügter korrespondierender Verbindungselemente (2) gebildeten Hohlraum einen rechteckigen Querschnitt aufweist.

**5.** Einrichtung nach Anspruch 4, **dadurch gekennzeichnet, dass** die in den Hohlraum einschiebbare Feder ein mit einem Anschlag versehenes, quaderförmiges Stabende (3.1) einer winkelförmigen Netzhalterung (3) ist.

**6.** Einrichtung nach Anspruch 5, **dadurch gekennzeichnet, dass** die winkelförmige Netzhalterung (3) aus einem zweischenkligen, unter etwa 90° abgebogenen, metallischen Rundstab besteht, bei dem ein Schenkel ein quaderförmiges Stabende (3.1) aufweist, wobei mindestens eine Kantenlänge des Quaderquerschnittes kleiner als der Durchmesser des Rundstabes ist und ein Rundstabende (3.2) am Übergang zum quaderf`örmigen Stabende (3.1) den Anschlag des quaderförmigen Stabendes (3.1) bildet.

**7.** Einrichtung nach einem der vorhergehenden Ansprüche, **dadurch gekennzeichnet, dass** an der der Tischtennisplatte (1) abgewandten Seite der jeweils angeschlossenen Verbindungselemente (2) überstehende Stege (2.4) angeordnet sind.

**8.** Einrichtung nach einem der vorhergehenden Ansprüche, **dadurch gekennzeichnet, dass** an den Verbindungselementen (2) Halterungen (2.5) zur zeitweiligen Aufnahme der Netzhalterungen (3) angeordnet sind.

**9.** Einrichtung nach einem der vorhergehenden Ansprüche, **dadurch gekennzeichnet, dass** die Verbindungselemente (2) zweischenklig sind, wobei jeweils ein Schenkel unterhalb der Tischtennisplatte (1) angeordnet und an dieser mit Schrauben (2.7) befestigt ist und Einsenkungen (2.6) aufweist und der zweite Schenkel am zu verbindenden Rand der Tischtennisplatte (1) zwischen den zu verbindenden Tischtennisplatten (1) angeordnet ist und dass an dem zweiten Schenkel die prismatischen Ausbuchtungen (2.2) angeordnet sind, wobei die Fügerichtung der prismatischen Ausbuchtungen (2.2) die Normale der Ebene der Tischtennisplatten (1) ist.
